Europäisches Patentamt

**European Patent Office**

**Office européen des brevets**

(11) Numéro de publication: **0 059 666**
**B1**

(12) **FASCICULE DE BREVET EUROPEEN**

(45) Date de publication du fascicule du brevet:
**10.10.84**

(21) Numéro de dépôt: **82400331.3**

(22) Date de dépôt: **25.02.82**

(51) Int. Cl.³: **H 04 N 7/04, G 09 G 1/16**

(54) **Dispositif d'affichage de messages graphiques transmis par des systèmes de vidéotex.**

(30) Priorité: **03.03.81 FR 8104578**

(43) Date de publication de la demande:
**08.09.82 Bulletin 82/36**

(45) Mention de la délivrance du brevet:
**10.10.84 Bulletin 84/41**

(84) Etats contractants désignés:
**BE DE GB NL**

(56) Documents cités:
**WO - A - 79/00745**
**DE - B - 2 949 020**
**FR - A - 2 404 359**
**GB - A - 1 556 366**

**TOUTE L'ELECTRONIQUE, no.439,janvier 1979, PARIS (FR), "Le systèm antlope", pages IV à IX**
**IEEE TRANSACTIONS ON CONSUMER ELECTRONICS, vol. CE-26, no. 3, août 1980, IEEE NEW YORK (US), J.P. CHAMBERS "Enhanced UK teletext moves towards still pictures", pages 527 à 554**
**IEEE TRANSACTIONS ON CONSUMER ELECTRONICS, vol. CE-26, no. 3, août 1980 IEEE NEW YORK (US), K.E. CLARKE "The application of picture coding techniques to viewdata", pages 568 à 577**
**ELECTRONIC DESIGN, vol. 27, no. 13, 21 juin 1979,**

(73) Titulaire: **L'Etat Français, représenté par le Ministre des P.T.T. (Centre National d'Etudes des Télécommunications), 38-40 rue du Général Leclerc, F-92131 Issy-les-Moulineaux (FR)**
Titulaire: **Etablissement Public de Diffusion dit "Télédiffusion de France", 21-27 rue Barbès, F-92120 Montrouge (FR)**

(72) Inventeur: **Marti, Bernard, La Pièce Chevalière Les Mottais, F-35530 Noyal-sur-Vilaine (FR)**

(74) Mandataire: **Le Guen, Louis François, 13, rue Emile Bara BP 91, F-35802 Dinard Cedex (FR)**

(56) Documents cités: (suite)
**HAYDEN PUBLISHING CO., ROCHELLE PARK (US), "Simplify video-display design by using a versatile IC controller", pages 94-102**
**INSTITUTE OF ELECTRICAL AND ELECTRONICS ENGINEERS, Nerem record vol. 15, no. 4, 6-8 novembre 1973, IEEE NEWTON (US), H.C. HENDRICKSON "Digital TV graphics", pages 39 à 46**
**IBM TECHNICAL DISCLOSURE BULLETIN, vol. 21, no.1, juin 1978, NEW YORK (US), J.E.R. YOUNG "Variable spaced alphanumeric display" pages 379-380**
**ELECTRONIC ENGINEERING, vol. 52, no. 633, janvier 1980, LONDRES (GB), D. THOMSON "Designing for consumer electronics-teletext and viewdata", pages 61 à 77**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

**Description**

La présente invention concerne un dispositif d'affichage sur écran de récepteur de télévision de messages graphiques transmis par des systèmes de vidéotex, comprenant un séparateur de données, un démodulateur de données, une mémoire de page, un générateur de caractères, un commutateur vidéo normale-vidéo graphique, un circuit de gestion, un clavier de définition de service relié au circuit de gestion, des moyens de génération de synchronisation interne, un circuit séparateur de la synchronisation externe du réseau de télédiffusion, et des moyens de commande de balayage entrelacé ou non entrelacé.

Un système de vidéotex est un système de transmission numérique et d'affichage de textes sur un écran de télévision. Plus particulièrement, l'invention concerne un perfectionnement au système de télétexte ANTIOPE qui a été décrit dans les brevets FR 2 363 949, 2 365 843, 2 419 623 et 2 313 825. Toutefois, l'utilisation du dispositif suivant l'invention n'est pas limitée au système de vidéotex décrit dans ces brevets, mais peut s'étendre à tous les système de vidéotex, tel que celui qui est connu sous le nom de CEEFAX. Plus généralement, l'invention s'applique à tous les vidéotex interactifs ou diffusés.

l'affichage des textes sur un écran de récepteur de télévision dans lequel on utilise un balayage à deux trames entrelacées entraîne un papillotement qui cause une fatigue visuelle importante.

Un objet de l'invention consiste à prévoir un dispositif qui supprime, dans la plupart des cas, le papillotement dans l'affichage des textes sur écran de télévision.

Les récepteurs de vidéotex diffusé comprennent des circuits de réception qui délivrent les signaux de synchronisation externe et la vidéo reçue, un décodeur de vidéotex dans lequel, en utilisant la synchronisation externe, est traitée la vidéo reçue, un générateur de caractères commandé par le décodeur et délivrant un signal vidéo synthétique au tube d'affichage d'un récepteur de télévision. Jusqu'à présent, on faisait fonctionner le tube d'affichage avec les signaux de synchronisation externe exactement comme pour obtenir une image ordinaire. Il en résultait une image à trames entrelacées et donc un papillotement. Toutefois, il est possible de faire fonctionner un tube de téléviseur avec un synchronisation à trames non entrelacées, ce qui réduit considérablement le papillotement.

Il a déjà été envisagé, comme il est décrit dans le brevet US 4 096 524, d'utiliser une synchronisation interne, à la place de la synchronisation externe, dans le cas où celle-ci n'est plus normalement reçue. Toutefois, dans le brevet américain 4 096 524, on utilise la synchronisation interne, uniquement pour pallier l'absence de synchronisation externe et, en particulier, on l'utilise pour restituer un balayage à trames entrelacées.

Dans le brevet FR 2 404 359, on a également décrit un montage de récepteur de vidéotex dans lequel des signaux de synchronisation séparés et des signaux engendrés localement peuvent être disponibles, avec une utilisation sélective, de l'une ou l'autre de ces deux formes de signaux de synchronisation, cette sélection n'étant pas uniquement commandée par le fait que les signaux de synchronisation séparés ne sont pas disponibles par suite de l'absence ou de l'inadaptation du signal de télédiffusion reçu. Dans ce brevet français, il est prévu un dispositif grâce auquel les signaux de synchronisation séparés sont utilisés pour la visualisation sur l'écran de télévision quand la visualisation d'une image de télévision normale est choisie par l'usager, un dispositif grâce auquel les signaux de synchronisation engendrés localement sont utilisés pour la visualisation sur l'écran de télévision quand une visualisation de d'information de message est choisie par l'usager et un dispositif pour assurer un accrochage de phase des signaux de synchronisation engendrés localement par rapport aux signaux de synchronisation séparés lorsqu'un signal vidéo adéquat est reçu.

Dans le brevet FR 2 447 122, il a également été proposé d'éviter le papillotement et le sautillement dans des images produites par des générateurs de caractères, tels que ceux des systèmes de vidéotex. Les moyens utilisés, pour obtenir ce résultat, comprennent un circuit interpolateur de trames, ce qui implique l'utilisation de mémoires relativement importantes et donc chères.

Dans le brevet DE 2 949 020, il est aussi proposé d'éviter le papillotement en modifiant la déviation verticale afin que les lignes des trames paires et impaires se recouvrent.

Un objet de la présente invention consiste à prévoir un dispositif, qui, par rapport aux dispositifs antérieurs mentionnés ci-dessus, permet de sélecter une synchronisation locale chaque fois qu'il y a avantage à la faire et chaque fois que cela est possible.

Un autre objet de l'invention consiste à prévoir un dispositif qui, chaque fois que l'on choisit une synchronisation locale, permet d'éviter le papillotement en utilisant des moyens simples et peu nombreux, et notamment plus simples que ceux qui ont été mentionnés ci-dessus.

Les objectifs de l'invention sont atteints en utilisant des dispositifs qui sont définis dans les revendications jointes 1 à 3.

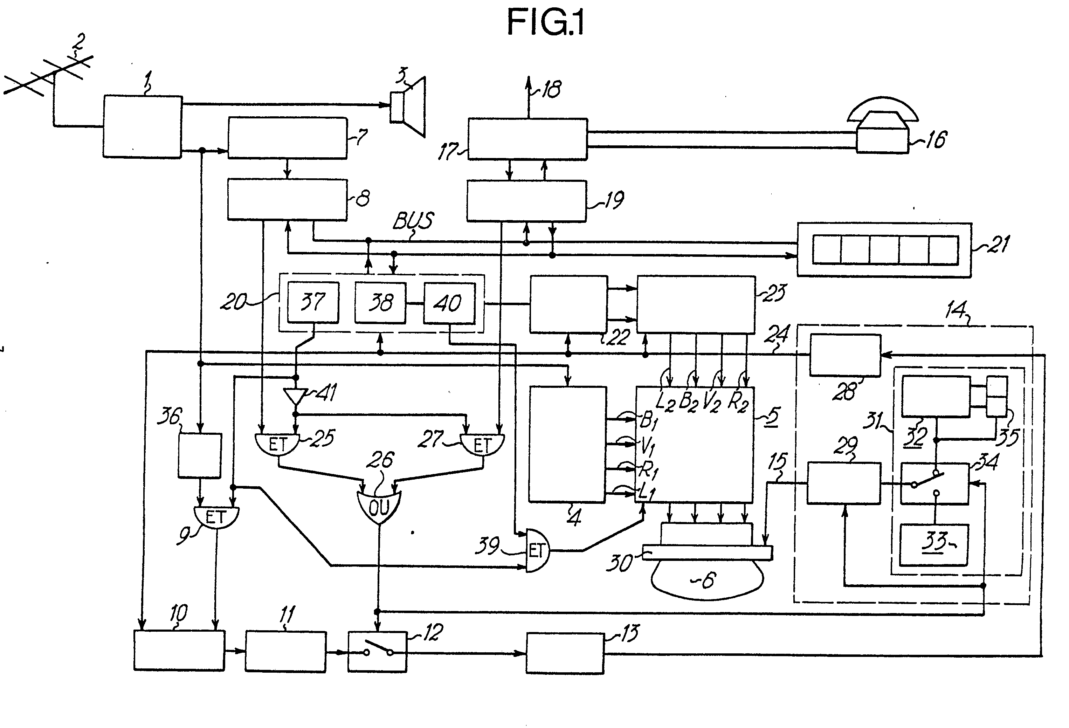

Les caractéristiques de l'invention mentionnées ci-dessus, ainsi que d'autres, apparaîtront plus clairement à la lecture de la description suivante d'un exemple de réalisation, ladite description étant faite en relation avec le dessin de la figure unique jointe.

Le dispositif de la figure unique comprend un circuit 1 de récepteur de télévision relié à une antenne 2 et qui délivre le son à un haut-parleur 3 et la vidéo et les informations de chrominance à un circuit de matriçage 4, qui transmet la luminance L1 et les signaux de chrominance B1, V1 et R1, à travers un commutateur 5, à un tube écran 6. La sortie vidéo du circuit 1 est également reliée à l'entrée d'un séparateur de données 7 qui alimente un démodulateur 8, semblable à celui qui est décrit dans le brevet français 2 313 825.

La sortie du circuit 1 est encore reliée à un circuit séparateur de synchronisation 36 dont la sortie est reliée à la première entrée d'une porte ET9 dont la sortie est reliée à la première entrée d'un comparateur de phase 10. La sortie du comparateur de phase 10 est reliée à l'entrée d'un circuit d'asservissement 11 dont la sortie est reliée par un commutateur électronique 12 à l'entrée d'un générateur pilote 13. La sortie du générateur pilote 13 est reliée à l'entrée d'une base de temps 14 qui engendre localement les signaux de synchronisation qui sont classiquement appliqués au tube 6, par la liaison 15. Le dispositif de la figure unique comprend encore un appareil téléphonique d'abonné 16 associé à un modem 17 qui est, d'une part, relié à une ligne téléphonique 18 et, d'autre part, à un interface de données 19.

Le dispositif est encore complété par un circuit de gestion 20 qui est relié par un bus d'échange de données BUS au démodulateur 8, à l'interface 19, à un clavier d'opérateur 21 et à une mémoire de page 22. La sortie de données de la mémoire 22 est reliée à l'entrée d'un générateur de caractères 23 dont la sortie transmet la luminance L2 et les signaux de chrominance B2, V2 et R2 aux secondes entrées du commutateur 5 qui, suivant son état, les transmet au tube écran 6.

Une liaison 24 de sortie de la base de temps 14 est reliée aux entrées d'horloge des circuits 20, 22 et 23, ainsi qu'à la seconde entrée du comparateur de phase 10. Le circuit de gestion 20 a une première sortie de commande reliée, d'une part, à la seconde entrée de la porte ET9 et, d'autre part, par l'intermédiaire d'un inverseur 41, à la première entrée d'une porte ET25 dont la sortie est reliée à la première entrée d'une porte OU26, et une seconde sortie de commande reliée à la première entrée d'une porte ET27 dont la sortie est reliée à la seconde entrée de la porte OU26.

La sortie de la porte OU26 est reliée à l'entrée de commande du commutateur électronique 12. Quand la porte OU26 ne délivre pas de signal, le commutateur 12 relie l'entrée du générateur 13 à la sortie du circuit d'asservissement 11. Quand la porte OU26 délivre un signal, le commutateur 12 coupe la liaison entre le générateur 13 et le circuit 11.

Le circuit d'asservissement 11 délivre un signal continu qui est fonction du signal de sortie du comparateur de phase 10, le signal continu agissant sur la fréquence du générateur pilote pour réduire l'écart de phase entre les signaux d'entrée du comparateur 10. Il apparaît que, quand le contact 12 est ouvert, le générateur 13 fonctionne à sa fréquence propre, qui peut être de 12 MHz. En pratique, le générateur 13 est stabilisé par un quartz.

La base de temps 14 comprend un ensemble 28 de diviseurs de fréquence qui délivrent, par 24, les signaux d'horloge nécessaires au circuit de gestion 20, à la mémoire de page 22 et au générateur de caractères 23, un ensemble 29 de diviseurs de fréquence qui délivre, par 15, au circuit de déviation 30 du tube 6 les signaux de synchronisation de trame et de ligne, et un circuit de commutation 31. En pratique, les diviseurs de l'ensemble 29 fonctionnent en décompteurs à partir d'une valeur initiale qui est appliquée à leur entrée de commande, laquelle est reliée à la sortie du circuit de commutation 31. Dans le circuit de commande 31, sont prévus deux registres de mémoire 32 et 33 dont les sorties de lecture sont respectivement reliées aux bornes fixes d'un commutateur 34 dont le contact mobile est relié à la sortie de 31. L'entrée de commande du circuit 31, c'est à dire du commutateur 34, est reliée à la sortie de la porte OU26.

Le registre 32 est, de plus, associé à une bascule 35 qui change d'état à chaque lecture du registre 32. Dans son premier état, la bascule 35 retranche 1 au contenu du registre 32 et, dans son autre état, elle lui ajoute 1. Si le contenu du registre associé de l'ensemble 29 est n, le contenu de 32 est choisi initialement égal à (n − 312), ce qui fait que le compteur de 29 compte alternativement 312 et 313. La lecture de 32 est effectuée à chaque passage par zéro du compteur de 29. Il en résulte que l'on retrouve bien le balayage à lignes entrelacées correspondant à la norme à 625 lignes.

Le contenu du registre 33 est fixe et choisi égal à 312. Il en résulte que les signaux appliqués à 30 par 29 correspond dans ce cas à un balayage non entrelacé, ce qui se concrétise par une suite de Trames identiques de 312 lignes. Les mémoires 32 et 33 ont même contenu au chiffre binaire des unités près. Ces mémoires peuvent être avantageusement remplacées par une mémoire à résistance, par exemple, délivrant le code 10011100X, la valeur de X déterminée par 34, étant soit zéro, soit le contenu de la bascule 35 qui change d'état à chaque passage à zéro du compteur 29.

Comme pour le commutateur 12, quand la porte OU26 ne délivre pas de signal, le contact 34 relie la mémoire 32 à la sortie de 31 et, dans le cas contraire, c'est le registre 33 qui est relié à la sortie de 31.

L'organe de gestion 20 est, de préférence, réalisé sous la forme d'un microprocesseur qui est capable en fonction des ordres délivrés par le clavier 21, qui est à la disposition de l'opérateur, de sélecter les données transmises sur le BUS, soit par le démodulateur 8, soit par l'interface 19. Le microprocesseur du circuit de gestion 20 comporte des moyens pour recevoir et analyser chaque octet de la rangée 0 de chaque page de vidéotex diffusé ou interactif. En particulier, il comporte un circuit 37 de reconnaissance d'un octet de type de synchronisation et un circuit 38 de reconnaissance de service de sous-titre. Quand le contenu de l'octet de type de synchronisation indique que l'affichage doit se faire avec synchronisation externe, le circuit 37 active sa sortie vers la porte ET9 et vers la première entrée d'une porte ET39. Dans le cas contraire, la sortie de 37 n'est pas activée ce qui ouvre les portes 25 et 27, par l'inverseut 41. Quand l'octet d'indication de sous-titre est reconnu, la sortie du circuit 38, qui est reliée à un compteur de lignes 40, est activée. Le compteur 40 est destiné à déterminer les lignes de la trame dans lesquelles doit se faire l'incrustation du sous-titre. Normalement, la sortie du compteur 40, qui est reliée à la seconde entrée de la porte 39, est activée ce qui ouvre la porte 39. La sortie de la porte 39 est reliée à l'entrée de commande du commutateur 5. Quand la sortie de 39 est activée, le commutateur 5 transmet les signaux provenant du circuit 4, dans la cas contraire, il transmet les signaux provenant di générateur de caractères 23. Pendant les lignes d'incrustation, la sortie de 40 n'est pas activée, ce qui ferme la porte 39.

Les secondes entrées des portes ET25 et 27 sont respectivement reliées à des sorties d'état des circuits 8 et 19, qui sont activées quand ces circuits sont en service.

Quand le service demandé est une émission normale de télévision, le circuit de gestion active sa sortie vers la porte 9, mais laisse les sorties vers 25 et 27 inactives. Donc la porte OU26 ne délivre pas de signal et le comparateur 10 asservit le générateur 13 à la synchronisation du réseau de télédiffusion. La base de temps 14 commande un balayage entrelacé sur le tube 6. Par ailleurs, la porte 39 est ouverte et la vidéo normale est appliquée au tube 6.

Quand le service demandé est un vidéotex diffusé, tel que le service ANTIOPE, le circuit de gestion 20 constate, dans un circuit de réception des octets de première rangée de chaque page 37, que l'octet de type de synchronisation désigne une synchronisation interne, ce qui ouvre la porte 25. Donc la porte OU26 ouvre le commutateur 12 et change l'état du commutateur 34. La base de temps 14 fonctionne en synchronisation interne et commande un balayage non entrelacé.

Quand le service demandé est un vidéotex interactif, tel que le service TELETEL, le circuit 20 constate encore, dans 37, que l'octet de type de synchronisation, désigne encore un synchronisation interne, ce qui ouvre la porte 27. On retrouve le cas du vidéotex diffusé.

Dans une autre variante, la sélection du modem 17 et de son interface 19, comme organe d'entrée des données, pourrait provoquer directement l'ouverture du commutateur 12. Dans ce cas, la porte 27 pourrait être supprimée, la seconde entrée de la porte 26 étant directement reliée à la sortie convenable de l'interface 19.

Quand le service diffusé est une incrustation dans une image de télévision normale, le circuit de gestion 20 constate que l'octet de type de synchronisation désigne une synchronisation externe, ce qui ouvre la porte 9. Donc, la base de temps fonctionne sur une synchronisation asservie et commande un balayage entrelacé. De plus, le circuit 38 reconnaît l'octet de sous-titre ce qui actionne le compteur 40 et assure, par 39, la commutation de 5 entre 4 et 23.

En pratique, le circuit de gestion étant sous la forme d'un microprocesseur, le circuit 37 est concrétisé par une simple cellule de mémoire.

**Revendications**

1. Dispositif d'affichage sur écran de récepteur de télévision de messages graphiques transmis par des systèmes de vidéotex, comprenant un séparateur de données, un démodulateur de données, une mémoire de page, un générateur de caractères, un commutateur vidéo normale-vidéo graphique, un circuit de gestion, un clavier de définition de service relié au circuit de gestion, des moyens de génération de synchronisation interne, un circuit séparateur de la synchronisation externe du réseau de télédiffusion, des moyens de commande de balayage entrelacé ou non entrelacé, caractérisé en ce qu'il comprend encore:

- des moyens d'asservissement de phase (10, 11),
- des premiers moyens de commutation (12) pour relier les moyens d'asservissement de phase (10, 11) aux moyens de synchronisation interne (13, 14),
- des seconds moyens de commutation (34) pour commuter sélectivement les moyens de commande (31) de balayage entrelacé ou non entrelacé,
- dans le démodulateur de données (8), en plus de sa sortie de données, une sortie d'indication d'état de travail,
- dans le circuit de gestion (20), un premier circuit de reconnaissance (37) d'un octet de type de synchronisation dans les octets de première rangée de chaque page, et
- des premiers moyens logiques (9, 25, 26) montés entre le premier circuit de reconnaissance (37) et la sortie d'indication d'état de travail du démodulateur de données (8), d'une part, et les premiers (12) et seconds (34) moyens de commutation, d'autre part, pour, en fonction de l'état du circuit (37) et de la sortie d'état du démodulateur (8), commander les premiers moyens et les seconds moyens de commutation (12, 34).

2. Dispositif suivant la revendication 1, comprenant un circuit de réception de service de vidéotex interactif, avec en série un modem (17) et un interface de données (19), dont la sortie est reliée au circuit de gestion (20), caractérisé en ce qu'il comprend des seconds moyens logiques (27, 26) montés entre le circuit (37) et l'interface (19), d'une part, et les premiers (12) et seconds (34) moyens de commutation pour, en fonction de l'état du circuit (37) et de l'état de l'interface (19), commander les premiers et seconds moyens de commutation.

3. Dispositif suivant la revendication 1 ou 2, caractérisé en ce que le circuit de gestion (20) comprend encore un second circuit de reconnaissance (38) d'un octet de sous-titre dans les octets de la première rangée de chaque page dont la sortie est reliée par des troisième moyens lagiques (39) pour commander le commutation du commutateur vidéo normale-vidéo graphique (5) pendant les lignes d'incrustation.

**Patentansprüche**

1. Sichtgerät für graphische Nachrichten, übertragen durch ein Videotextsystem auf einen Fernsehempfängerschirm, mit einem Daten-Separator, einem Daten-Demodulator, einem Seiten-Speicher, einem Zeichen-Generator, einem normalen videographischen Videoschalter, einem Management-Schaltkreis, einem mit dem letzteren verbundenen Tastenfeld zur Service-Definition, einer internen Synchronisierungs-Erzeugereinrichtung, einem Schaltkreis zum Trennen der externen Fernsehnetz-Synchronisierung, einer Einrichtung zum Steuern von ineinandergreifendem und nicht-ineinandergreifendem Wobbeln, gekennzeichnet durch folgende weitere Merkmale:

— eine phasenstarre Einrichtung (10, 11),
— eine erste Schalteinrichtung (12) zum Verbinden der phasenstarren Einrichtung (10, 11) mit der internen Synchronisierungs-Einrichtung (13, 14),
— einer zweiten Schalteinrichtung (34), um selektiv die ineinandergreifenden und nicht-ineinandergreifenden Wobbelsteuereinrichtungen (31) zu schalten,
— in dem Daten-Demodulator (8) zusätzlich zu seinem Datenausgang einen Ausgang zur Anzeige des Betriebszustandes,
— in dem Management-Schaltkreis (20) eine erste Byte-Erkennungsschaltung (37) zum Erkennen des Typs der Synchronisierung unter den Bytes der ersten Reihe jeder Seite, und
— eine erste logische Schaltung (9, 25, 26), die zwischen die erste Erkennungsschaltung (37) und den Ausgang zur Anzeige des Betriebszustandes des Daten-Demodulators (8) einerseits, und die erste (12) und die zweite (34) Schalteinrichtung andererseits geschaltet ist, um die erste und die zweite Schalteinrichtung (12, 34) entsprechend dem Zustand der Erkennungsschaltung (37) und dem Ausgang für die Anzeige des Betriebszustandes des Demodulators (8) zu steuern.

2. Sichtgerät nach Anspruch 1, mit einem interaktiven Videotext-Empfänger, mit einem Modulator/Demodulator (17) und einem Datenzwischengerät (19), die in Reihe liegen, dessen Ausgang an den Management-Schaltkreis (20) gelegt ist, dadurch gekennzeichnet, daß es eine zweite logische Schaltung (26, 27) aufweist, die zwischen der Schaltung (37) und dem Datenzwischengerät (19) einerseits und der ersten (12) und der zweiten (34) Schalteinrichtung geschaltet ist, um die erste und die zweite Schalteinrichtung zu steuern, entsprechend dem Zustand der Schaltung (37) und dem Zustand des Daten-Zwischengerätes (19).

3. Sichtgerät nach Anspruch 1 oder 2, dadurch gekennzeichnet, daß der Management-Schaltkreis (20) ferner eine zweite Erkennungsschaltung (38) aufweist, um ein Kennzeichen-Byte unter den Bytes der ersten Reihe jeder Seite zu erkennen, mit einem Ausgang, der über eine dritte logische Schaltung (39) angeschlossen ist, um das Schalten des normalen videographischen Videoschalters (5) während den Einführungszeilen zu steuern.

**Claims**

1. An apparatur to display graphic messages transmitted by videotext systems on a television receiver screen comprising a data separator, a data demodulator, a page memory, a character generator, a normal video-graphic video switch, a management circuit, a service definition keyboard connected to the management circuit, internal synchronization generation means, a circuit to separate the external television network synchronization, means to control interlaced and non-interlaced sweeping, characterized in that it also os comprised of:

— phase locking means (10, 11),
— first switching means (12) to connect the phase locking means (10, 11) to the internal synchronization means (13, 14),
— second switching means (34) to selectively switch the interlaced and non-interlaced sweep control means (31),
— within the data demodulator (8), in addition to its data output, a working condition indicator output,
— within the management circuit (20), a first byte type recognition circuit (37) to recognize the type of synchronization among the bytes of the first row of each page, and
— first logic means (9, 25, 26) connected between the first recognition circuit (37) and the working condition indicator output of the data demodulator (8), on one hand, and the first (12) and second (34) switch means, on the other hand, to control the first and second switching means (12, 34) responsive to the condition of the circuit (37) and the working condition indicator output of the demodulator (8).

2. An apparatus in accordance with claim 1, comprising an interactive videotext receiver, with serially a modem (17) and a data interface (19), whose output is connected to the management circuit (20), characterized in that it comprises second logic means (26, 27) connected between the circuit (37) and the data interface (19), on one hand, and the first (12) and second (34) switching means to control the first and second switching means, responsive to the condition of the circuit (37) and the condition of the data interface (19).

3. An apparatus in accordance with claim 1 or 2, characterized in that the management circuit (20) also comprises a second recognition circuit (38), to recognize a caption byte among the bytes of the first row of each page, having an output which is connected through third logic means (39) to control the switching of the normal videographic video switch (5) during the insertion lines.

FIG.1